# EUROPEAN PATENT APPLICATION

(11) **EP 4 775 359 A1**
(43) Date of publication of application: **15.07.2026**
(21) Application number: 25209507.0
(22) Date of filing: 17.10.2025
(51) Int. Cl.: B25J 15/02

(54) **SINGLING GRIPPER SYSTEM AND ROBOT SYSTEM FOR HANDLING OBJECTS**

(30) Priority: 10.01.2025 IN 202511002482
(71) Applicant: Delta Electronics India Pvt Ltd., Gurugram, Haryana 122201 (IN)
(72) Inventor: RAUSHAN, Rakesh Kumar, 122201 Gurugram, Haryana (IN)
(74) Representative: 2K Patent Partnerschaft mbB

(57) **Abstract**

The present application discloses a singling gripper system (200) for handling objects comprising a gripper assembly (210) including a gripper unit (240) having at least a set of parallel and opposite adaptive gripper fingers (245); a pusher unit (250) having a plate (255). A servo control unit/controller (275) in operative communication with a servomotor (270) is configured to synchronously control motion of the adaptive gripper fingers (245) and the pusher unit (250) with the plate (255) thereby gripping and handling placement of objects. The servo control unit/controller (275) in operative communication with a robot system (300) along with the singling gripper system (200) is configured to place objects (310) to/from an object management system (302) with object (310) placement plane changes.

## Description

### CROSS-REFERENCE TO RELATED APPLICATION

This application claims priority to Indian Patent Application No. 202511002482, filed on January 10, 2025, which is hereby incorporated by reference in its entirety.

### TECHNICAL FIELD

The present application relates to a singling gripper system and a robot system for handling objects. The robot system along with singling gripper system may be subjected to a continuous series of sequential operations to place objects gripped from an input object container to a feeder of a singular unit of the object management system promoting object placement plane changes.

### BACKGROUND

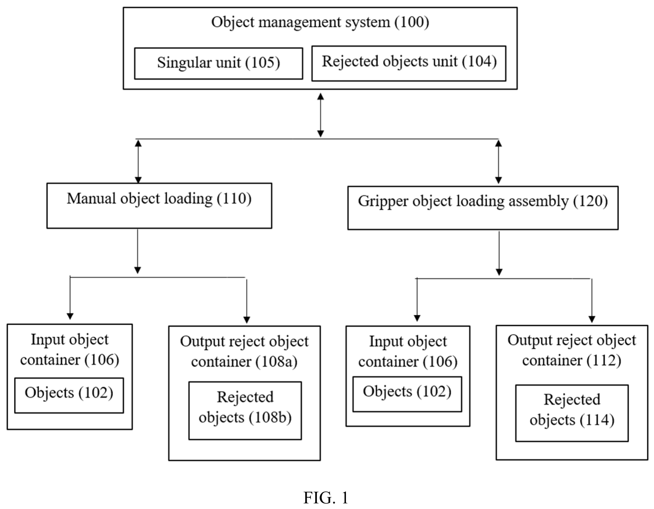

Generally, an object management system may be employed for verifying and sorting objects. Referring FIG. 1 discloses a conventional object management system (100) including a conventional singular unit (105) inbuilt with a sensor and adjustable flaps and a rejected objects unit (104). The singular unit (105) may be located at a certain pre-determined angle within the object management system (100). The objects (102) may be located within an input object container (106) and rejected objects (108b) may be located within an output reject object container (108a). It may be desired that the objects (102) may be loaded into the singular unit (105) such that the object management system (100) may verify and sort the objects (102) for further processing or reject the objects (102) to the rejected objects unit (104).

Conventionally, objects (102) were subjected to manual object loading (110) into the singular unit (105) and manual unloading from the rejected objects unit (104). However, such a manual operation has significant inherent limitations. Manual object loading (110) is relatively laborious, time consuming and inefficient. Therefore, to overcome the limitations of manual object loading (110), there have been robot systems with a gripper object loading assembly (120). The gripper object loading assembly (120) having gripper fingers may be configured to grip a predetermined number of objects (102) located within the input object container (106) from the top and load the objects (102) to the singular unit (105). Also, the gripper object loading assembly (120) may be configured to grip a predetermined number of rejected objects (114) from the rejected objects unit (104) and unload the rejected objects (114) to the output reject object container (112). Generally, in a continuous singling operation, it may be desired that a first set of individual gripped objects (102) placed into the singular unit (105) and a second set of individual gripped objects (102) stacked upon the first set of individual gripped objects (102) remain maintained in continuous form as uninterrupted operations. Further, it may be desired that stacked rejected objects (114) from the rejected objects unit (104) may be gripped and placed into the reject object container (112) as per desired capacity.

However, such conventional robot systems with the gripper object loading assembly (120) also suffer from significant limitations. Primarily, such conventional robot systems with the gripper object loading assembly (120) face challenges and fail to meet the requirements of continuous singling and reject handling operations. Conventional robot systems with the gripper object loading assembly (120) are limited in the way they approach, grasp, and release stacked objects (102) into the singular unit (105). Due to the limitation of shape, size, configuration and angular location of the singular unit (105), which when trying to place the stacks of objects (102), particularly for objects made of soft, non-rigid or low-friction material, without disturbing their alignment pose challenges and fail to load objects (102) into the object management system (100) without causing misalignments. Also, in conventional robot systems with the gripper object loading assembly (120), potential variations in quantity, quality and class of the predetermined number of objects (102) impact the behavior of the stack when being handled by the gripper object loading assembly (120) failing to provide consistent and reliable performance of continuous singling. Conventional gripper object loading assembly (120) fails to grip the objects (102) based on above said variations accurately without causing disruptions in the singular unit (105). Additional effect of gravity on the individual objects (102) within the stack may cause further limitation. The gripper object loading assembly (120) fails to manage the gravitational forces acting on the objects (102) and maintain their alignment and prevent unwanted movements during the singular process. Also, in the conventional gripper object loading assembly (120) the gripper's finger remains underneath the objects leading to inaccurate alignment, unloading of the objects (102) into the singular unit (105).

Therefore, there exists a need to provide a singling gripper system and a robot system that overcomes one or more of the aforementioned problems and handles the objects securely without causing damage and misalignments while loading within the object management system.

### SUMMARY

Accordingly, an exemplary aspect of the present application discloses a singling gripper system for handling objects comprising a gripper assembly having a proximal rear end and a distal front end, said gripper assembly including: a gripper unit having at least a set of parallel and opposite adaptive gripper fingers coupled to said distal front end of said gripper assembly; a pusher unit having a plate coupled perpendicular to said adaptive gripper fingers along an object insertion direction; and a servomotor in communication with said gripper unit and pusher unit; and a servo control unit in operative communication with said servomotor configured to synchronously control motion of said adaptive gripper fingers and said pusher unit with said plate thereby gripping and handling placement of objects by actuating said pusher unit with a pushing force acting perpendicular to a gripping force of said adaptive gripper fingers, or along a Z-axis for pushing said objects in a stacking orientation parallel to said pushing force, while simultaneously said adaptive gripper fingers ungrasp said objects.

According to another exemplary aspect, the present application discloses a robot system for handling objects comprising a base; a vertical first link arm coupled to said base; a horizontal second link arm coupled to said vertical first link arm; a singling gripper system coupled to said horizontal second link arm; and a servo control unit in operative communication with said singling gripper system configured to place objects to/from an object management system.

### BRIEF DESCRIPTION OF DRAWINGS

The above and other aspects, features, and advantages of certain exemplary embodiments of the present application will be more apparent from the following description taken in conjunction with the accompanying drawings in which:
FIG. 1 illustrates a block diagram representing conventional object management system with either manual object loading or a conventional gripper object loading assembly.
FIG. 2 illustrates an isometric view of a singling gripper system for handling objects, according to an exemplary aspect of the present application.
FIG. 3 illustrates a block diagram representing the singling gripper system for handling objects, according to an exemplary embodiment of the present application.
FIG. 4 illustrates a block diagram representing a robot system for handling objects, according to another exemplary aspect of the present application.
FIGS. 5a and 5b illustrates isometric views of the robot system in a primary sequence of operation at first and second positions, according to the exemplary embodiment of the present application.
FIGS. 6a, 6b and 6c illustrates isometric views of the robot system in a secondary sequence of operation at third, fourth and fifth positions, according to the exemplary embodiment of the present application.
FIG. 7 illustrates an isometric view of the robot system in a tertiary sequence of operation at a sixth position, according to the exemplary embodiment of the present application.
FIGS. 8a, 8b, 8c and 8d illustrates isometric views of the robot system in a quaternary sequence of operation at seventh and eighth positions, according to the exemplary embodiment of the present application.
FIG. 9 illustrates a method of handling objects, according to the exemplary embodiment of the present application.

Persons skilled in the art will appreciate that elements in the figures are illustrated for simplicity and clarity and may have not been drawn to scale. For example, the dimensions of some of the elements in the figures may be exaggerated relative to the other elements to help to improve understanding of various exemplary embodiments of the present disclosure. Throughout the drawings, it should be noted that reference signs are used to depict the same or similar elements, features, and structures.

### DESCRIPTION OF EMBODIMENTS

While this application is susceptible of embodiments in many different forms, there is shown in the drawings and will herein be described in detail, a preferred embodiment of the application with the understanding that the present disclosure is to be considered as an exemplification of the principles of the application and is not intended to limit the broad aspects of the application to the embodiment illustrated. Other aspects, advantages, and salient features of the application will become apparent to those skilled in the art from the following detailed description, which, taken in conjunction with the annexed drawings, discloses exemplary embodiments of the application. Embodiments of the present disclosure will now be described with reference to the accompanying drawings. Embodiments are provided to convey the scope of the present disclosure thoroughly and fully to a person skilled in the art. Numerous details are set forth relating to specific components to provide a complete understanding of embodiments of the present disclosure. It will be apparent to the person skilled in the art that the details provided in the embodiments should not be construed to limit the scope of the present disclosure. In some embodiments, well-known processes, well-known apparatus structures, and well-known techniques are not described in detail.

In general, the present application discloses a singling gripper system for handling objects comprising a gripper assembly including a gripper unit having at least a set of parallel and opposite adaptive gripper fingers; a pusher unit having a plate; and a servomotor in communication with said gripper unit and pusher unit; and a servo control unit in operative communication with said servomotor configured to synchronously control motion of said adaptive gripper fingers and said pusher unit with said plate thereby gripping and handling placement of objects. The servo control unit in operative communication with a robot system along with the singling gripper system is configured to place objects to/from an object management system with object placement plane changes.

In the exemplary implementation of the present application, the adaptive gripper assembly may be configured to adjust at least a set of parallel and opposite adaptive gripper fingers according to the shape, size, and quantity of the object being handled. The objects may have diverse classes, types with varying sizes, textures, and surface properties. The intelligent servo control system coupled to the adaptive gripper assembly are configured to adjust grip force and handling parameters based on the specific characteristics of each class or type, ensuring reliable handling regardless of the variation. For objects which may vary in thickness, stiffness, condition, and when dealing with varying quantities of objects in a stack or pile, the gripper assembly ensures a secure grip without damaging the objects. In an exemplary implementation of the present application, synchronized motion refers to the coordinated movement of multiple components in a system. In this context, the pusher unit with the plate and at least a set of parallel and opposite adaptive gripper fingers move together smoothly and precisely to handle and place the objects without causing damage or misalignment. The objects may be placed with a non-perpendicular angle, preferably sharp angle, to a horizontal plane. The singling gripper system of the present application effectively, reliably and precisely places the objects ensuring accuracy in stacking or sorting, and efficient operation to maintain productivity. The gripper assembly operates gently to handle the objects to avoid damaging the objects. In the exemplary implementation, the singling gripper system of the present application may be configured to provide flexibility in placement of the objects. With the ability to adjust to different planes and orientations, the singling gripper system may accommodate diverse requirements for placing objects, whether it's stacking them vertically, laying them flat, or arranging them in specific configurations. The singling gripper system is a highly adaptable and reliable system for handling objects, capable of efficiently dealing with variations in quantity, quality, class, and placement requirements. This not only improves operational efficiency but also reduces the risk of errors and damage to the objects, ultimately enhancing the overall performance of the automated handling process. In the exemplary implementation, the singling gripper system of the present application may be easily manufactured by CNC machine. The singling gripper system does not require any specific working techniques. Designs and structures of all elements are as per available general source of manufacturing. According to an exemplary embodiment, the objects disclosed in the present application include but are not limited to banknotes among others. The electrical connections, processors, command controls, which are commonly known in servo motion motors and servo control system are employed herein the present application and the description of the same which is generally known in the art is omitted. The singling gripper system and robot system of the present application may be used in banknote management application as an example, in which the objects are piles of packaged or unpackaged banknotes and the object management system may be a banknote management system. The singling gripper system of the application may be used in feeding loose banknotes from a banknote container for sorting and further collect rejected banknotes to place them in another rejected banknote container. The present application may have particular benefit in dealing with materials, objects that includes banknotes, paper-like or soft materials among others.

With the teachings of the present application, when compared with conventional gripper system and robots for handling objects within objects management system, there is easy loading of the objects from the container to a feeder of singular unit of the object management system without any misalignments and damage to the objects, thereby effectively saving operational process time and reducing the associated power and maintenance costs. The singling gripper system and the robot system of the present application, therefore, also have an economic significance with a high level of reliability in terms of electrical controls and communication.

The terminology used in the present disclosure is only for the purpose of explaining a particular embodiment and such terminology shall not be considered to limit the scope of the present disclosure. The use of the expression "at least" or "at least one" suggests the use of one or more elements or ingredients or quantities, as the use may be in the embodiment of the disclosure to achieve one or more of the desired objects or results. As used in the present disclosure, the forms "a," "an," and "the," may be intended to include the plural forms as well, unless the context clearly suggests otherwise. The terms "comprises," "comprising," "including," and "having," are open ended transitional phrases and therefore specify the presence of stated elements, units and/or components, but do not forbid the presence or addition of one or more other elements, components, and/or groups thereof.

The terms and words used in the following description and claims are not limited to the bibliographical meanings but are merely used by the inventor to enable a clear and consistent understanding of the application. Accordingly, it should be apparent to those skilled in the art that the following description of exemplary embodiments of the present application are provided for illustration purpose only and not for the purpose of limiting the application as defined by the appended claims and their equivalents. Accordingly, it should be apparent to those skilled in the art that the following description of a singling gripper system, and a robot system for handling objects referred in the description for the purpose of the understanding and nowhere limit the application. The skilled person will be able to devise various structures and shapes of the singling gripper system, gripper unit, robot, electrical connections, communications, that, although not explicitly described herein, embody the principles of the present application. All the terms and expressions in the description are only for the purpose of understanding and nowhere limit the application. Terms like plurality, first, second, third, fourth, fifth, sixth, seventh, eighth, rotation, inclined, perpendicular, parallel, angle, degrees of freedom, primary, secondary, tertiary, quaternary sequences, inwards, outwards, are used to differentiate between objects having the same terminology and are in no way intended to represent a chronological order, unless where explicitly stated otherwise. Moreover, all statements herein reciting principles, aspects, and embodiments of the application, as well as specific examples thereof, are intended to encompass equivalents thereof. Thus, while structure of the singling gripper system and robot system with desired configuration, shape, diameters, angles, inclination, mounting surfaces, mounting structures, manufacturing processes, degrees, dimensions, have been disclosed, nowhere limit the application, and are provided for understanding of the application. It will be appreciated those of ordinary skill in the art that various changes and modifications of the embodiments manufactured with other design parameters and configurations as well and are not limited to those described herein above may be as per operational requirements by making necessary changes without departing from the scope of the application.

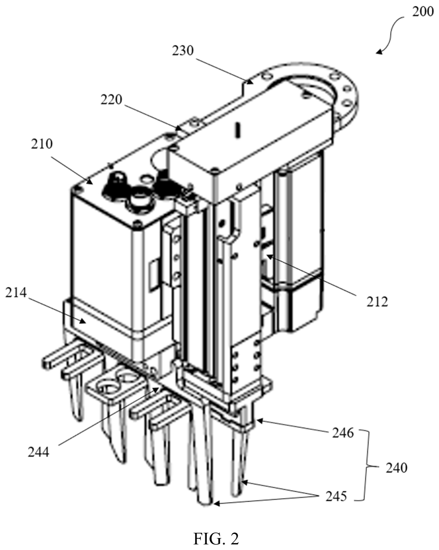

FIGS. 2 to 9 illustrate a singling gripper system (200), a gripper assembly (210), a proximal rear end (212), a distal front end (214), a gripper mounting plate (220), a gripper mounting flange (230), a gripper unit (240), a closing end (244), at least a set of parallel and opposite adaptive gripper fingers (245), a gripper finger retainer (246), a pusher unit (250), a plate (255), a plurality of sensors (260), a servomotor (270), a servo control unit/controller (275), a robot system (300), an object management system (302), a singular unit (304), a rejected objects unit (306), objects (310), input object container (312), output reject object container (314), rejected objects (315), a base (320), vertical first link arm (330), a horizontal second link arm (340), at least a part of the horizontal second link arm (345), a pre-determined first location (350), a pre-determined intermediary location (355), a pre-determined second location (360), sequence of operations (S1-S4), positions (P1-P8), X-axis (X1-X1, X2-X2), Y-axis (Y-Y), Z-axis (Z-Z), direction of the observer (OBD) and a method (400).

The singling gripper system (200), and the robot system (300) shall now be described in detail herein. Referring FIG. 2, according to an exemplary first aspect of the present application, illustrates a singling gripper system (200) having a gripper assembly (210) coupled with a servo control unit for efficient and precise handling of objects. As seen in FIG. 2, the gripper assembly (210) has a proximal rear end (212) and a distal front end (214). The gripper assembly (210) includes a gripper unit (240) having at least a set of parallel and opposite adaptive gripper fingers (245) coupled to said distal front end (214) of said gripper assembly (210) via a gripper finger retainer (246) of said gripper unit (240). The gripper assembly (210) also includes a pusher unit (250) having a plate (255) coupled perpendicular to at least said set of parallel and opposite adaptive gripper fingers (245) along an object insertion direction. The pusher unit (250) with said plate (255) may be located at a closing end

(244) of a gripping cavity formed intermediary to at least said set of parallel and opposite adaptive gripper fingers (245). The pusher unit (250) with said plate (255) without integrating with at least said set of parallel and opposite adaptive gripper fingers (245) is configured to slide along and through gaps of at least said set of parallel and opposite adaptive gripper fingers (245) to contact and push said objects. The gripper assembly (210) further includes a servomotor (270) in communication with said gripper unit (240) and pusher unit (250). The gripper assembly (210) includes a gripper mounting plate (220) and a gripper mounting flange (230) coupled at said proximal rear end (212) and said pusher unit (250) is coupled to said gripper mounting flange (230). The at least a set of electric parallel and opposite adaptive gripper fingers (245) may be coupled with electric servomotors (270) to open and close the at least a set of parallel and opposite adaptive gripper fingers (245) for gripping objects securely. The gripper unit (240) may be inclined along said Z-axis (Z-Z) while ungrasping said objects. The at least said set of parallel and opposite adaptive gripper fingers (245) and said pusher unit (250) with said plate (255) translate in opposite directions while ungrasping said objects.

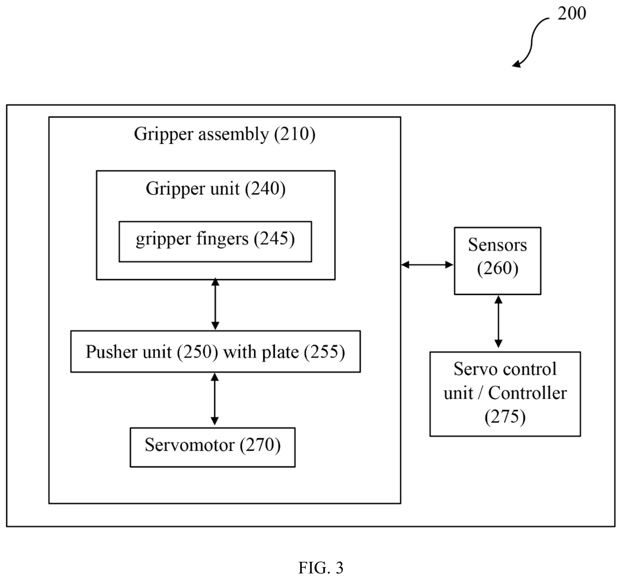

Referring FIG. 3, illustrates a block diagram of the singling gripper system (200) according to an exemplary embodiment of the present application. As seen in FIG. 3, the gripper assembly (210) may be optimized with the at least a set of parallel and opposite adaptive gripper fingers (245) of the gripper unit (240). The gripper assembly (210) may be configured with a pusher unit (250) with a plate (255). The gripper assembly (210), the griper unit (240) along with the at least a set of parallel and opposite adaptive gripper fingers (245) and the pusher unit (250) with the plate (255) may be coupled with a plurality of sensors (260) that include but not limited to a pressure sensor, a force sensor or a proximity sensor. The sensors (260) may be configured to be coupled to the intelligent servo control system having a controller (275) for providing real-time feedback to the control system (275) about the grip force, position, and condition of the objects. The real-time feedback obtained from the sensors (260) is useful for adapting motion of the gripper assembly (210), adjusting the gripping force of the at least a set of parallel and opposite adaptive gripper fingers (245), accordingly, ensuring gentle handling and preventing excessive force that could damage the objects. The griper unit (240) may be connected to a pneumatic device and a plurality of solenoid valves that are in communication with a control system/controller (275) to activate pressure supply desired for gripping and ungripping/ungrasping the objects. The combination of the at least a set of electric parallel and opposite adaptive gripper fingers (245) and the additional pusher unit (250) with the plate (255) are configured to control the vertical movement of the objects along the Z-axis in difficult scenarios efficiently, saving time, money without misalignment and damages. The pusher unit (250) with the plate (255) may be coupled to a set of servo-driven electric actuators which operates with precision as the set of servo-driven electric actuator has control on movement of the additional pusher unit (250) with the plate (255) along an inclined plane of Z-axis, ensuring synchronized motion with the at least a set of parallel and opposite adaptive gripper fingers (245) for specific thought of object placement accurately and efficiently. A servo control unit with the controller (275) in operative communication with said servomotor (270) may be configured to synchronously control motion of at least said set of parallel and opposite adaptive gripper fingers (245) and said pusher unit (250) with said plate (255) thereby gripping and handling placement of objects by actuating said pusher unit (250) with a pushing force acting perpendicular to a gripping force of at least said set of parallel and opposite adaptive gripper fingers (245), or along the Z-axis (Z-Z) for pushing said objects in a stacking orientation parallel or in a sharp angle to said pushing force, while simultaneously at least said set of parallel and opposite adaptive gripper fingers (245) ungrasp said objects. The servo control unit having a controller (275) is configured to initiate actuation of at least an actuator of said pusher unit (250) to push said plate (255) and/or regulate pressure actuating inwards and outwards motion of said set of parallel and opposite adaptive gripper fingers (245) to grip/ungrasp said objects based on feedback obtained from at least a sensor in operative communication with said gripper unit (240) and said pusher unit (250).

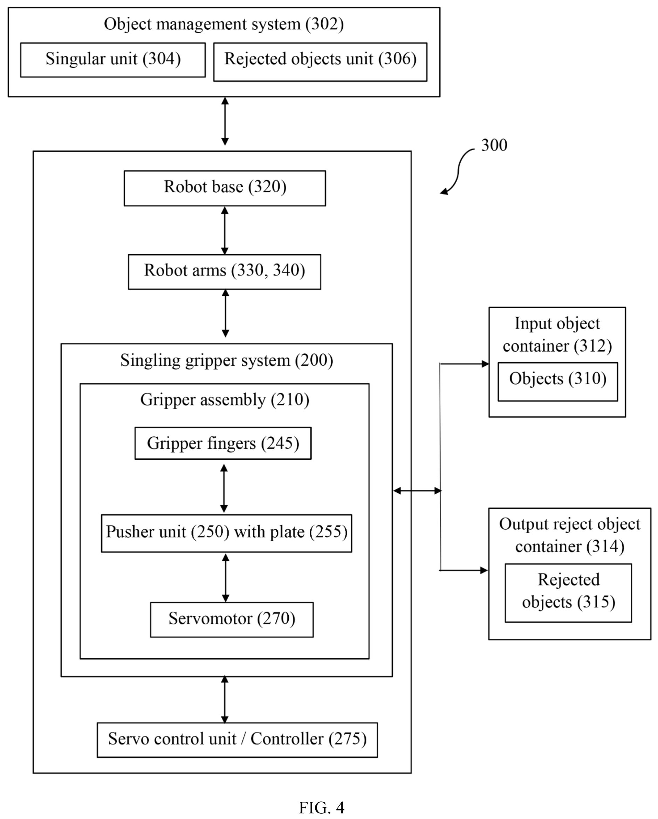

Referring FIG. 4, according to an exemplary second aspect of the present application, illustrates block diagram of a robot system (300) for handling objects to/from an object management system (302). The robot system (300) may comprise a singling gripper system (200) with gripper assembly (210) with at least a set of parallel and opposite adaptive gripper fingers (245), pusher unit (250) with the plate (255) and a servo control unit having a controller (275) coupled with servomotors (270), actuators and sensors for handling and placing objects (310) to/from the object management system (302). The object management system (302) may comprise a singular unit (304) and a rejected objects unit (306). The robot arm may pick objects (310) from input object container (312) and may place the objects into a feeder of the singular unit (304). The robot arm is also configured to collect rejected objects (315) from reject cabinet/rejected objects unit (306) and place them into an output reject object container (314). The pusher unit (250) with the plate (255) may be disposed at closing end or internal end of the parallel gripper finger's (245) grasping cavity between the at least a set of parallel and opposite adaptive gripper fingers (245) and may be configured to apply a pushing force in perpendicular direction to the grasping gripping force of the at least a set of parallel and opposite adaptive gripper fingers (245), or along an inserting direction of the objects (310). The intelligent servo control unit/controller (275) may be configured to release force on the at least a set of parallel and opposite adaptive gripper fingers (245) in synchronized motion while the pusher unit (250) with plate (255) may be configured to translate stacks of the objects (310) into the feeder of the singular unit (304) along for example inclined plane along Z-axis (Z-Z) to make system (300) stable and easy removal of the objects (310) from the at least a set of parallel and opposite adaptive gripper fingers (245).

According to the exemplary embodiment, the servo control unit/controller (275) may be configured to control the motions of the gripper finger (245) and the pusher unit (250) such that the pusher unit (250) applies a pushing force to the objects along for example inclined plane along Z-axis (Z-Z) while the gripper finger (245) is releasing the objects (310), the two motions are in synchronously or in the same speed. In such way, the stack of objects (310) be safely placed into the feeder cabinet in a stacking orientation in parallel with the pushing force. The pusher unit (250) with the plate (255) starts pushing the objects (310) and the robot arm is configured to pull back the at least a set of parallel and opposite adaptive gripper fingers (245) at same speed, resulting no movement or falling in the stack of objects (310). The pusher unit (250) with the plate (255) moves the objects down to place them precisely where needed. The singling gripper system (200) of the present application may be configured to provide precise control over the movement of the gripper assembly (210), at least a set of parallel and opposite adaptive gripper fingers (245) and the additional pusher unit (250) with plate (255), enabling accurate placement of the objects (310) even in varying orientations from vertical to horizontal and dealing with gravitational effects. The gripper assembly (210) may be configured to align stacks of objects (310) into the feeder of the singular unit (304) of the object management system (302) without disturbing the alignment of the objects (310). Once the objects (310) are aligned into the feeder of the singular unit (304), the at least a set of parallel and opposite adaptive gripper fingers (245) open the finger jaws to release gripping force first, then the pusher unit (250) with the plate (255) starts pushing the objects (310) along for example inclined plane along Z-axis (Z-Z), while simultaneously, the at least a set of parallel and opposite adaptive gripper fingers (245) are pulled back safely to place objects (310) properly. This ensures safe removal of stack of objects (310) from the at least a set of parallel and opposite adaptive gripper fingers (245), treat objects (310) as static in air and removing physical gripper body out.

In the exemplary implementation of the present application, the singling gripper system (200) may be sensor (260) enabled for smart working, long life and maintenance free solution. The gripper assembly (210) with the at least a set of parallel and opposite adaptive gripper fingers (245) and the pusher unit (250) with the plate (255) may controlled by the same servo control unit/controller (275) with servomotors (270), actuators and sensors (260) coupled therewith and thus work synchronously. The servo control unit/controller (275) and motor (270) may be configured/controlled to apply different levels of forces. The pusher unit (250) with the plate (255) is not entirely integrated with the at least a set of parallel and opposite adaptive gripper fingers (245). The at least a set of parallel and opposite adaptive gripper fingers (245) of the present application supports the placement of the object (310) and may be different from the conventional grippers. The at least a set of parallel and opposite adaptive gripper fingers (245) ensure to avoid disturbance caused by conventional gripper finger when putting down objects (310). In the present application, synchronous operation includes movement of the gripper assembly (210), gripping the objects (310) by the at least a set of parallel and opposite adaptive gripper fingers (245) and pushing the objects by the pusher unit (250) with the plate (255) along for example inclined plane along Z-axis (Z-Z), while placing objects (310) in the singular unit (304) based on feedback of the servo control unit/controller (275) that is configured to apply pressing force while releasing at least a set of parallel and opposite adaptive gripper fingers (245).

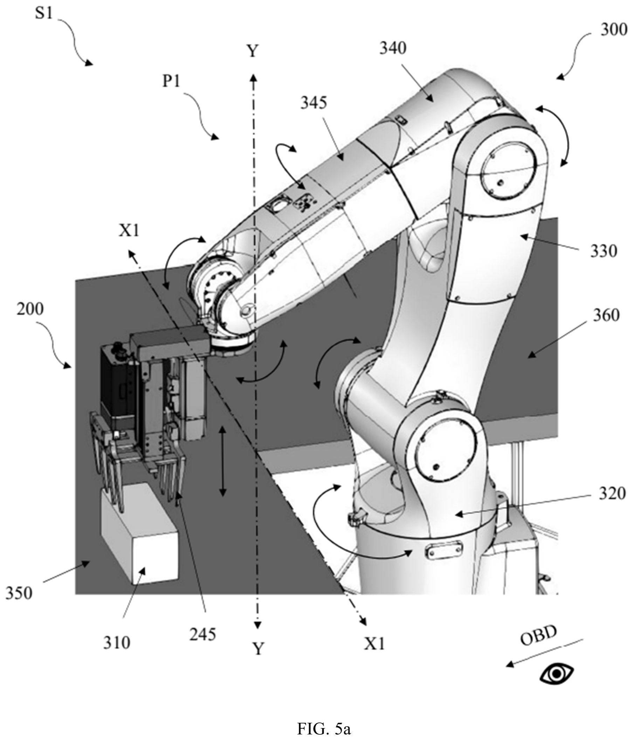

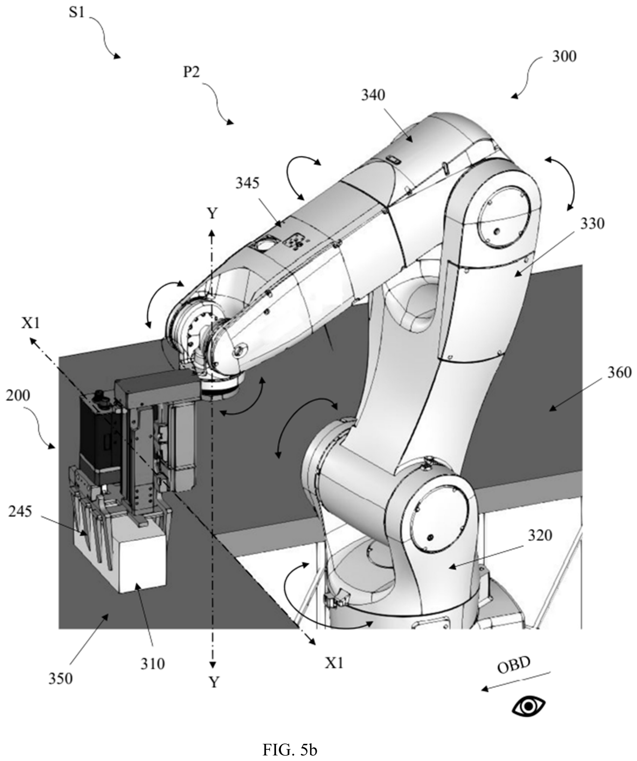

FIGS. 5a and 5b illustrates isometric views of the robot system (300) in a primary sequence of operation (S1) at first and second positions (P1, P2), according to the exemplary embodiment of the present application. As seen in FIG. 5a, a robot system (300) may be configured to comprise a vertical first link arm (330) coupled to a base (320) and a horizontal second link arm (340) coupled to the vertical first link arm (330). A singling gripper system (200) may be vertically coupled to the horizontal second link arm (340). A servo control unit/controller (275) in operative communication with said singling gripper system (200) configured to place objects (310) to/from an object management system (302). Referring FIG. 4 along with FIGS. 5a and 5b to FIGS. 8a-8d, in the exemplary implementation of the present application, the robot system (300) along with singling gripper system (200) may be subjected to translation/rotation in a continuous series of sequential operations (S1-S4) about a plurality of positions (P1-P8) to align/place stacks of objects (310) gripped from an input object container (312) into a feeder of a singular unit (304) of the object management system (302) without disturbing the alignment of the objects (310) and promoting object (310) placement plane changes from a pre-determined first location (350) in a horizontal plane along an X-axis (X1-X1) to a pre-determined intermediary location (355) while crescentic along a trajectory of a vertical plane along a Y-axis (Y-Y) and to a pre-determined second location (360) in a horizontal plane along an X-axis (X2-X2) or at an inclined plane along Z-axis (Z-Z). The X-axis (X1-X1) may be defined in the direction of the observer (OBD) and the Y-axis (Y-Y) may be defined perpendicular to X-axis (X1-X1). The Z-axis (Z-Z) may be defined inclined to the Y-axis (Y-Y) or in the direction of the pusher unit (250).

Referring FIG. 5a, according to the exemplary embodiment, in a primary sequence of operation (S1), the robot system (300) with the singling gripper system (200) in a first position (P1) may be stationed on the base (320) perpendicular to an X-axis (X1-X1) in the direction of the observer (OBD). Now, in a next second position (P2), referring to Figure 5B, the vertical first link arm (330) and the horizontal second link arm (340) of the robot system (300) may be configured to be translated in a forward and downwards degrees of freedom, while the singling gripper system (200) may be configured to descend a vertical plane along a Y-axis (Y-Y) to grip objects (310) located on a horizontal plane along the X-axis (X1-X1) at a pre-determined first location (350). In the exemplary implementation of the present application, for gripping the objects, the at least a set of parallel and opposite adaptive gripper fingers (245) of the singling gripper system (200) may be configured to move inwards towards the objects (310) and apply desired pressure to grip the objects (310). The robot system (300) with the singling gripper system (200) in the second position (P2) after gripping the objects (310) may be configured to ascend rearwards and upwards in the vertical plane along the Y-axis (Y-Y) while the vertical first link arm (330) and the horizontal second link arm (340) of the robot system (300) are configured to be translated rearwards and upwards to the first position (P1) of the robot system (300).

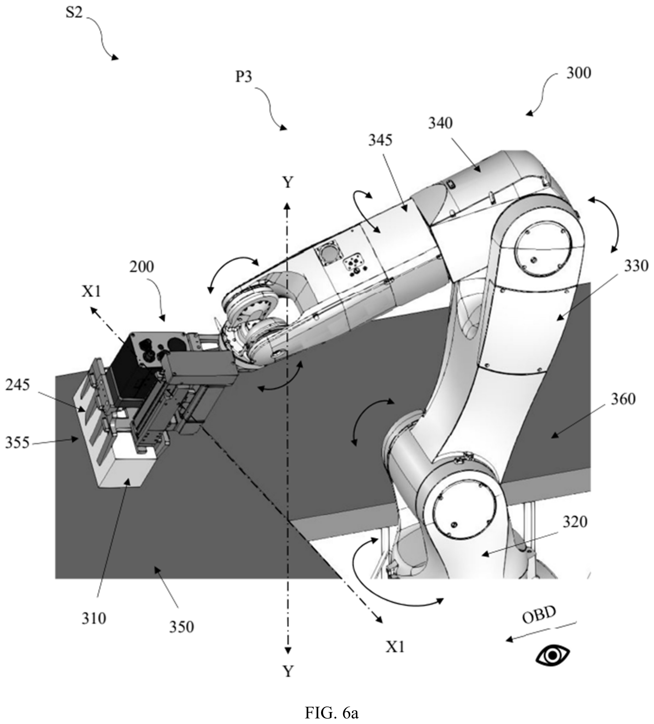

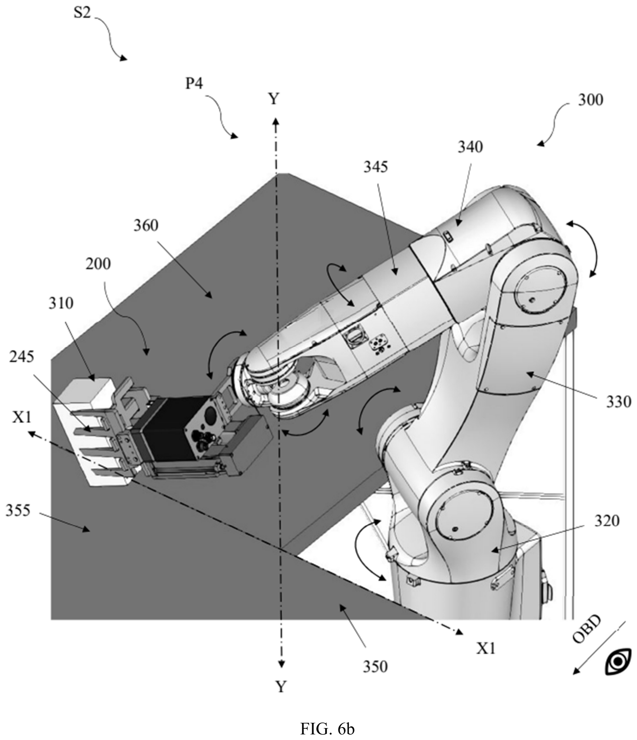

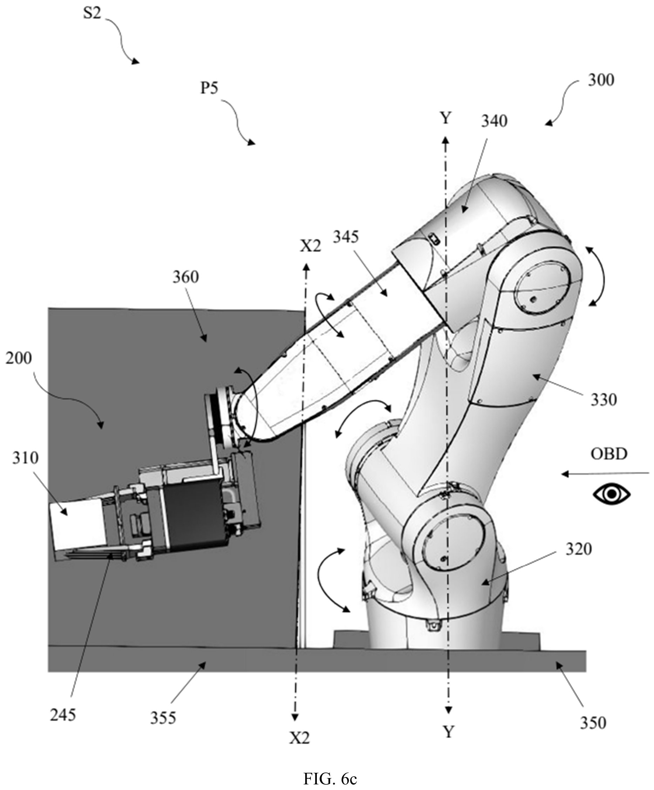

FIGS. 6a, 6b and 6c illustrates isometric views of the robot system (300) in a secondary sequence of operation (S2) at third, fourth and fifth positions (P3, P4, P5), according to the exemplary embodiment of the present application. As seen in FIG. 6a, in a secondary sequence of operation (S2), while the vertical first link arm (330) of the robot system (300) remains in the first position (P1), at least a part of the horizontal second link arm (345) along with the singling gripper system (200) with gripped objects (310), in a third position (P3) may be configured to crescent along a trajectory of the vertical plane along the Y-axis (Y-Y) to a pre-determined intermediary location (355) while sequentially and partially rotating about a desired degree of freedom as per operational requirement for example but not limited to 0° to 90°. Now, referring FIG. 6b, the at least a part of the horizontal second link arm (345) along with the singling gripper system (200) with the gripped objects (310) may be oriented until, in a fourth position (P4), the gripped objects (310) may be oriented parallel to the vertical plane along the Y-axis (Y-Y), and perpendicular to the horizontal plane along the X-axis (X1-X1) and the pre-determined first location (350). In a next continual operation, Referring Figure 6C, the at least a part of the horizontal second link arm (345) along with the singling gripper system (200) with the gripped objects (310) may be continued to be oriented until, in a fifth position (P5), the gripped objects (310) may be oriented inclined to the vertical plane along the Y-axis (Y-Y), and the horizontal plane along the X-axis (X2-X2) in the direction of the observer (OBD) away from the pre-determined intermediary location (355). In orienting to the fifth position (P5), the base (320) of the robot system (300) may also be configured to partially rotate about a desired degree of freedom as per operational requirement for example but not limited to 0° to 90°.

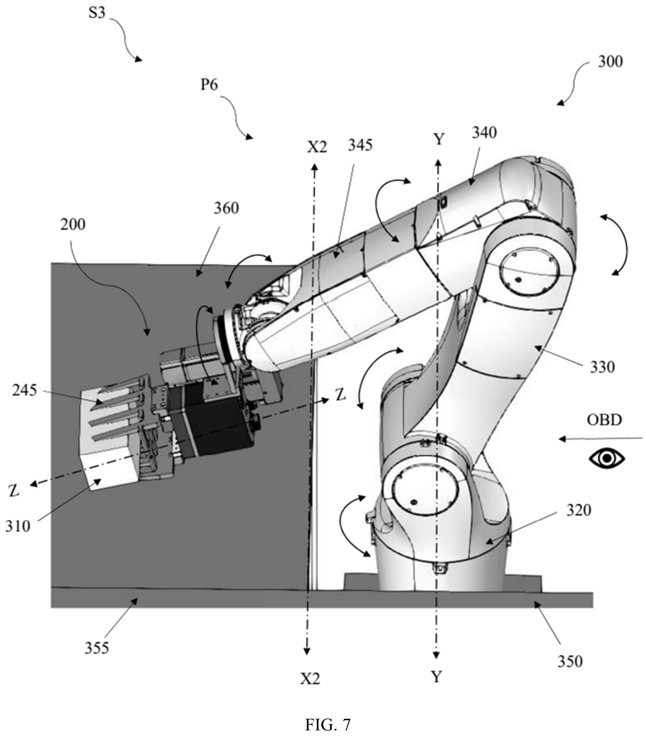

Referring FIG. 7 illustrates an isometric view of the robot system (300) in a tertiary sequence of operation (S3) at a sixth position (P6), according to the exemplary embodiment of the present application. As seen in FIG. 7, in a tertiary sequence of operation (S3), while the vertical first link arm (330) of the robot system (300) remains in the first position (P1), the base (320) of the robot system (300) and at least said part of the horizontal second link arm (345) along with the singling gripper system (200) in a sixth position (P6) may be configured to sequentially and completely rotate about a desired degree of freedom as per operational requirement for example but not limited 90° to 180° until, the gripped objects (310) and the singling gripper system (200) in the sixth position (P6), may be oriented to a pre-determined second location (360) in a horizontal plane along an X-axis (X2-X2) or at an inclined plane along a Z-axis (Z-Z) with a pre-determined inclination for example but not limited to be in the range of 30° to 45°. In the sixth position (P6), the base (320) with the vertical first link arm (330) and the horizontal second link arm (340) may be oriented perpendicular to a pre-determined second location (360) which may be parallel to horizontal plane along the X-axis (X2-X2) in the direction of the observer (OBD).

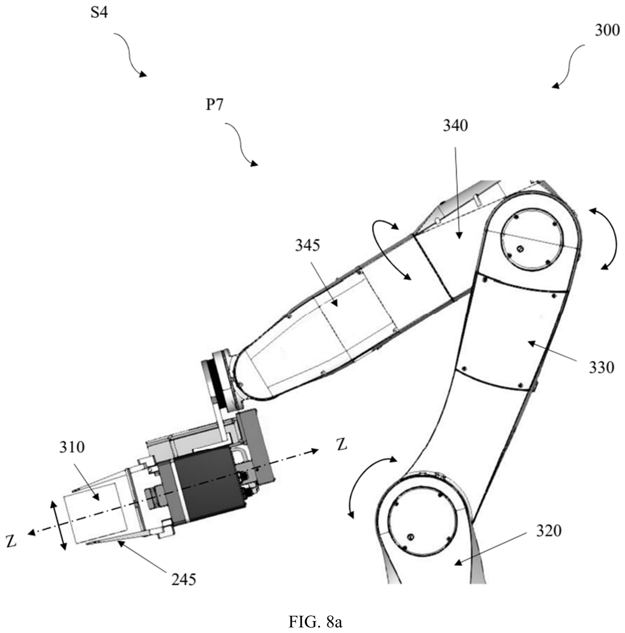

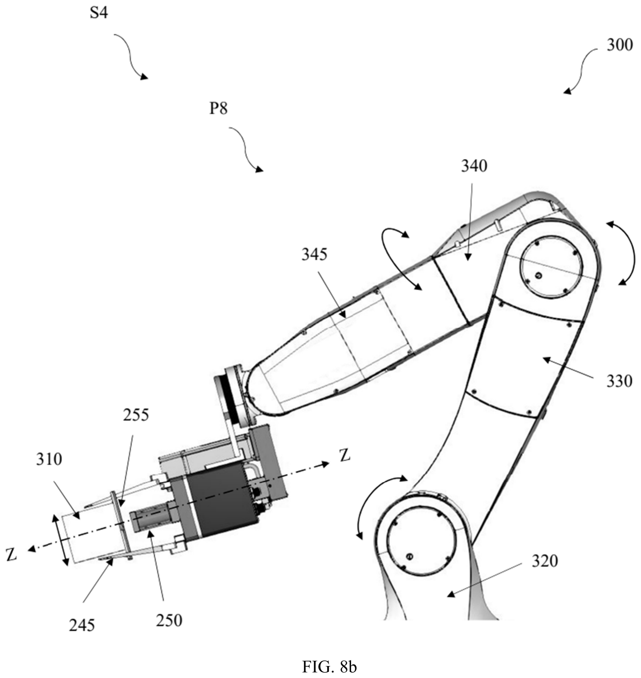

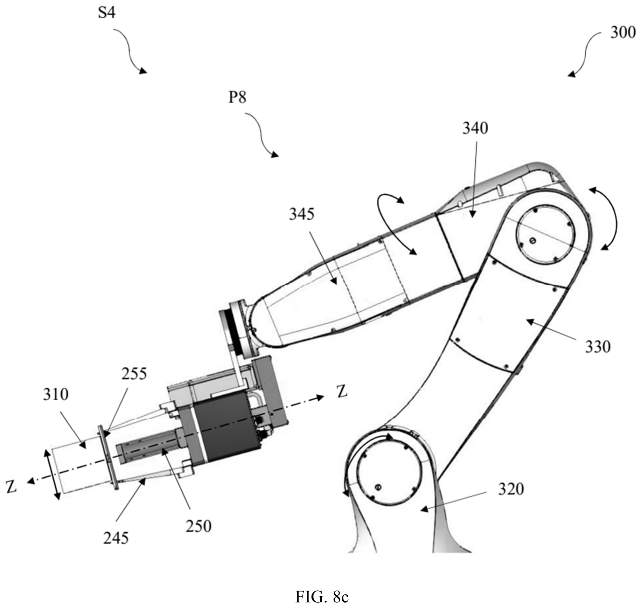

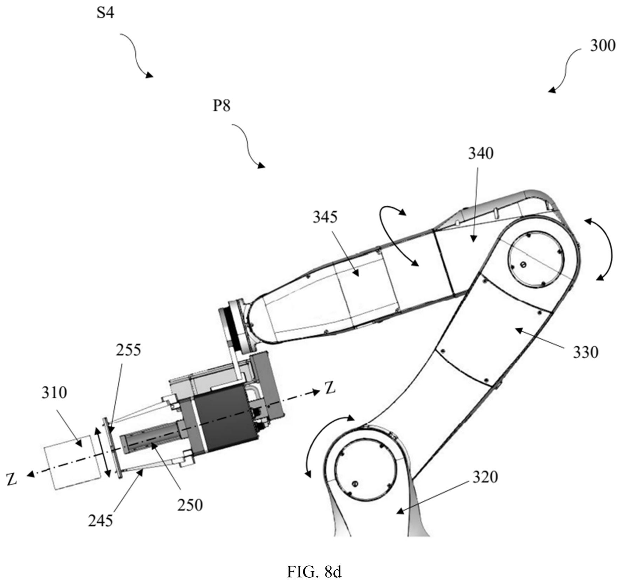

FIGS. 8a, 8b, 8c and 8d illustrates isometric views of the robot system (300) in a quaternary sequence of operation (S4) at seventh and eighth positions (P7, P8), according to the exemplary embodiment of the present application. As seen in FIG. 8a, in a quaternary sequence of operation (S4), while the vertical first link arm (330) of the robot system (300) remains in the first position (P1) and the base (320) of the robot system (300) and at least said part of the horizontal second link arm (345) along with the singling gripper system (200) remains in the sixth position (P6), the at least a set of parallel and opposite adaptive gripper fingers (245) of the singling gripper system (200) in a seventh position (P7) of the robot system (300), may be located within the feeder of the singular unit (304) (refer to FIG. 4) with the objects (310) on top of the at least a set of parallel and opposite adaptive gripper fingers (245) and not completely placed within the singular unit (304). In the seventh position of the robot system (300), the at least a set of parallel and opposite adaptive gripper fingers (245) may be configured to move outwards away from the gripped objects (310) by releasing a desired pressure to un-grip the objects (310) by the servo control unit/controller (275). Now, in a continual sequence of operation, referring FIGS. 8b, 8c and 8d, illustrate that the robot system (300) in an eighth position (P8), may be configured to actuate a pusher unit (250) plate (255) of the singling gripper system (200). The servo control unit/controller (275) in communication with actuators initiate synchronous translation of the pusher unit (250) that pushes the plate (255) sliding through and along the at least a set of parallel and opposite adaptive gripper fingers (245) in the inclined plane along the Z-axis (Z-Z) to a first half of the length of the at least a set of parallel and opposite adaptive gripper fingers (245) until the plate (255) encounters the gripped objects (310) and pushes the objects (310) into the singular unit (304). Once, the plate (255) encounters the gripped objects (310), simultaneous synchronized rewards motion of the singling gripper system (200) along with the vertical first link arm (330) and horizontal second link arm (340) occur, while the plate (255) further slides through and along a second half of the length of the at least a set of parallel and opposite adaptive gripper fingers (245) to completely place the objects (310) within the singular unit (304). Since, the objects (310) are already located on top of the at least a set of parallel and opposite adaptive gripper fingers (245) but within the singular unit (304), the rearwards pushing motion of the singling system (200) along with the vertical first link arm (330) and horizontal second link arm (340) enables easily removal of the at least a set of parallel and opposite adaptive gripper fingers (245) beneath the objects (310) without causing any damage or disturbance or misalignment of the objects (310) and the objects may be complete placed within the singular unit (304). Throughout, the operation of the plate (255) sliding through and along the first and second half of the length of the at least a set of parallel and opposite adaptive gripper fingers (245), the gripped objects (310) remains aligned within the at least a set of parallel and opposite adaptive gripper fingers (245) that provide support to the gripped objects (310) until the gripped objects (310) are completely placed into the feeder of the singular unit (304) without causing any disturbance and misalignment of the objects (310) and the objects may be complete placed within the singular unit (304) after complete removal of the singling system (200).

Now, again referring FIG. 4, in a similar manner of operations as explained above, the robot system (300) of the present application, may be configured to collect rejected objects (315) from reject cabinet/rejected objects unit (306) and place into an output reject object container (314) without causing any damage or disturbance or misalignment of the objects (310).

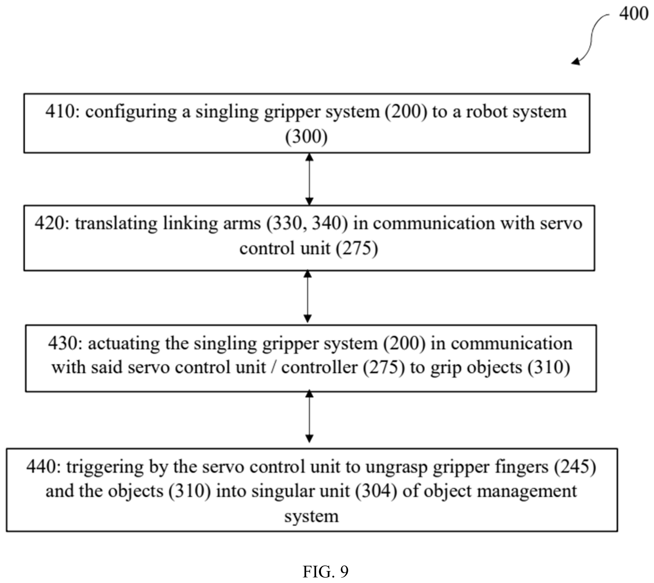

Referring FIG. 9 illustrates a method (400) of handling objects, according to the exemplary embodiment of the present application. The method (400) comprises the steps of: (410) configuring a singling gripper system (200) to a robot system (300); (420) translating vertical first link arm (330) and horizontal second link arm (340) of the robot system (300) in communication with a servo control unit/controller (275); (430) actuating the singling gripper system (200) in communication with said servo control unit/ controller (275) for synchronized translation and varying rotational degrees of freedom of the robot system (300) along with the singling gripper system (200) i.e., the orientation and translation of at least said part of the horizontal second link arm (345) along with the object (310) from a pre-determined first position (350) to a pre-determined second position (360) located within a feeder of a singular unit (30), along an inclined Z-axis (Z-Z), while the object (310) are gripped by the at least a set of parallel and opposite adaptive gripper fingers (245) of the singling gripper system (200); (440) triggering by the servo control unit having the controller (275) of the singling gripper system (200) to actuate ungrasping of the at least a set of parallel and opposite adaptive gripper fingers (245) by releasing pressure and simultaneous synchronized translation of pusher unit (250) with plate (255) along the inclined plane of the Z-axis (Z-Z) to release the gripped objects (310) into the feeder of the singular unit (304) without causing any damage or disturbance or misalignment of the objects (310) while simultaneously the rearwards pushing motion of the singling system (200) along with the vertical first link arm (330) and horizontal second link arm (340) enables easily removal of the at least a set of parallel and opposite adaptive gripper fingers (245) beneath the objects (310) without causing any damage or disturbance or misalignment of the objects (310) and the objects may be complete placed within the singular unit (304). The pusher unit (250) with plate (255) along said inclined plane of the Z-axis (Z-Z) is necessary and configured to release said gripped objects (310) into the feeder of the singular unit (304) without damage or misalignment of the objects (310). The pusher unit (250) along with plate (255) adjust misalignment of objects if any as the objects are not vertically dropped from said pusher unit (250).

There have been described and illustrated herein several embodiments of exemplary indicative implementation of singling gripper system (200) and a robot system (300) for handling objects. It will also be apparent to a skilled person that the embodiments described above are specific examples of a single broader invention, which may have greater scope than any of the singular descriptions taught. There may be many alterations made in the description without departing from the scope of the application. While embodiments of the application have been described, it is not intended that the application be limited to said configuration disclosed thereto, as it is intended that the application be as broad in scope as the art will allow and that the specification be read likewise not restrictive to the terminology described herein above. Any discussion of embodiments included in this specification is solely for the purpose of providing a context for the disclosure. It is not to be taken as an admission that any or all these matters form a part of the prior art base or were common general knowledge in the field relevant to the disclosure as it existed anywhere before the priority date of this application.

## Claims

1. A singling gripper system (200) for handling objects (310), the singling gripper system (200) comprises:
a gripper assembly (210) having a proximal rear end (212) and a distal front end (214), the gripper assembly (210) comprises:
a gripper unit (240) having at least a set of parallel and opposite adaptive gripper fingers (245) coupled to the distal front end (214) of the gripper assembly (210);
a pusher unit (250) having a plate (255) coupled perpendicular to the adaptive gripper fingers (245) along an object insertion direction; and
a servomotor (270) in communication with the gripper unit (240) and the pusher unit (250); and
a controller (275) configured to synchronously control motion of the adaptive gripper fingers (245) and the pusher unit (250) with the plate (255) thereby gripping and handling placement of the objects (310) by actuating the pusher unit (250) with a pushing force acting perpendicular to a gripping force of the adaptive gripper fingers (245), or along a Z-axis (Z-Z), for pushing the objects (310) in a stacking orientation parallel to the pushing force, while simultaneously the adaptive gripper fingers (245) ungrasp the objects (310).

2. The singling gripper system (200) according to claim 1, wherein the gripper unit (240) is at an inclined plane along the Z-axis (Z-Z) while ungrasping the objects.

3. The singling gripper system (200) according to claim 1 or 2, wherein the adaptive gripper fingers (245) and the pusher unit (250) with the plate (255) translate in opposite directions while ungrasping the objects (310).

4. The singling gripper system (200) according to any one of claims 1-3, wherein the pusher unit (250) with the plate (255) is located at a closing end (244) of a gripping cavity formed intermediary to the adaptive gripper fingers (245).

5. The singling gripper system (200) according to any one of claims 1-4, wherein the pusher unit (250) with the plate (255) without integrating with the adaptive gripper fingers (245) is configured only to slide along and through the adaptive gripper fingers (245) to contact and push the objects (310).

6. The singling gripper system (200) according to any one of claims 1-5, wherein the controller (275) is configured to initiate actuation of at least an actuator of the pusher unit (250) to push the plate (255) and/or regulate pressure actuating inwards and outwards motion of the set of parallel and opposite adaptive gripper fingers (245) to grip/ungrasp the objects (310) based on feedback obtained from at least a sensor in operative communication with the gripper unit (240) and the pusher unit (250).

7. The singling gripper system (200) according to any one of claims 1-6, wherein the set of parallel and opposite adaptive gripper fingers (245) are coupled to the distal front end (214) of the gripper assembly (210) via a gripper finger retainer (246) of the gripper unit (240).

8. The singling gripper system (200) according to any one of claims 1-7, wherein the gripper assembly (210) includes a gripper mounting plate (220) and a gripper mounting flange (230) coupled at the proximal rear end (212) and the pusher unit (250) is coupled to the gripper mounting flange (230).

9. A robot system (300) for handling objects (310), the robot system (300) comprises:
a base (320);
a vertical first link arm (330) coupled to the base (320);
a horizontal second link arm (340) coupled to the vertical first link arm (330);
a singling gripper system (200) as claimed in anyone of preceding claims 1-6 coupled to the horizontal second link arm (340); and
a servo control unit/controller (275) in operative communication with the singling gripper system (200) configured to place the objects (310) to/from an object management system (302), the servo control unit/controller (275) synchronously controls motion of at least a set of parallel and opposite adaptive gripper fingers (245) and a pusher unit (250) with a plate (255) of the singling gripper system (200) thereby gripping and handling placement of the objects (310) by actuating the pusher unit (250) with a pushing force acting perpendicular to a gripping force of the adaptive gripper fingers (245), or along a Z-axis (Z-Z) for pushing the objects (310) in a stacking orientation parallel to the pushing force, while simultaneously the adaptive gripper fingers (245) ungrasp the objects (310).

10. The robot system (300) according to claim 9, wherein servo control unit/controller (275) is configured to translate/rotate the robot system (300) in a continuous series of sequential operations (S1-S4) about a plurality of positions (P1-P8).

11. The robot system (300) according to claim 9 or 10, wherein the singling gripper system (200) is configured to align stacks of the objects (310) into a feeder of a singular unit (304) of the object management system (302) without disturbing the alignment of the objects (310).

12. The robot system (300) according to any one of claims 9-11, wherein the singling gripper system (200) is configured to grip and place the objects (310) with the desired object (310) placement plane changing from a pre-determined first location (350) in a horizontal plane along an X-axis (X1-X1) to a pre-determined intermediary location (355) while crescentic along a trajectory of a vertical plane along a Y-axis (Y-Y) and to a pre-determined second location (360) at an inclined plane along the Z-axis (Z-Z).

13. The robot system (300) according to any one of claims 9-12, wherein the pusher unit (250) with the plate (255) at the inclined plane along the Z-axis (Z-Z) is configured to release the gripped objects (310) into the feeder of the singular unit (304) and adjust misalignment of the objects (310).
